# EUROPÄISCHE PATENTSCHRIFT

(11) **EP 3 155 355 B1**
(45) Veröffentlichungstag und Bekanntmachung des Hinweises auf die Patenterteilung: **22.05.2019**
(21) Anmeldenummer: 15729818.3
(22) Anmeldetag: 16.06.2015
(51) Int. Cl.: F41A 25/18, F41A 25/04, F16F 9/34

(54) **DÄMPFER FÜR EINE WAFFE**
DAMPER FOR A WEAPON
AMORTISSEUR POUR UNE ARME

(30) Priorität: 16.06.2014 DE 202014102780 U; 27.08.2014 DE 202014103999 U
(43) Veröffentlichungstag der Anmeldung: 19.04.2017
(73) Patentinhaber: Rheinmetall Waffe Munition GmbH, 29345 Unterlüß (DE)
(72) Erfinder: EGGERT, Klaus-Peter, 72369 Zimmern u. d. B. (DE)
(74) Vertreter: Dietrich, Barbara
(86) Internationale Anmeldenummer: PCT/EP2015/063413
(87) Internationale Veröffentlichungsnummer: WO 2015/193277

(56) Entgegenhaltungen:
- FR-A- 371 076
- US-A- 2 199 878
- US-A- 2 397 188
- US-A- 3 455 204

## Beschreibung

Die Erfindung beschäftigt sich mit einem Dämpfersystem für eine Waffe, insbesondere für eine fremd angetriebene Maschinenwaffe.

Dämpfer bzw. Dämpfersysteme dienen dazu, den Rückstoß einer Waffe nach Schussabgabe zu dämpfen. Für das Vorholen der beim Rückstoß zurück laufenden Massen besitzen derartige Waffen häufig einen separaten Vorholer.

Aus dem Stand der Technik sind diverse Dämpfer für Waffen bekannt. Dabei greifen großkalibrige Waffen auf andere Dämpfungssysteme zurück als klein- und mittelkalibrige Waffen.

Die DE 35 03 318 A1 beschreibt einen hydraulischen Rückschlagdämpfer für automatische oder halbautomatische Handfeuerwaffen oder Waffen mit einem mittels Federn zurückgeführten Kolben und einem Druckrohr, das ein linear Drosselsystem umfasst. Ein Rückschlagventil schließt beim Herausfahren des Kolbens. Die Rückfahrzeit und / oder Ausfahrgeschwindigkeit ist durch die Drosselöffnung steuerbar. Des Weiteren ist das System nach außen und / oder innen druckmitteldicht abgedichtet. Auch US 2 397 188 A offenbart einen Dämpfer für eine Waffe.

Es stellt sich daher die Aufgabe, einen Dämpfer für eine insbesondere klein- oder mittelkalibrige, lafettierbare Waffe aufzuzeigen, der eine hohe Dämpfungsrate aufweist, einfach aufgebaut ist und leicht in die Waffe eingebunden werden kann.

Gelöst wird die Aufgabe durch die Merkmale des Patentanspruchs 1. Vorteilhafte Ausführungen sind den Unteransprüchen ausgeführt.

Der Erfindung liegt die Idee zugrunde, den Dämpfer hydraulisch auszuführen und dabei die Kennlinie der hydraulischen Dämpfung für den Vorlauf der Waffe als auch für den Rücklauf der Waffe individuell einzustellen.

Der hydraulische Dämpfer weist eine erste und eine sich beim Dämpfen bildende bzw. minimierende zweite Kammer sowie einen Vorratsraum (Tank) auf. Der Fluidstrom von der ersten Kammer zum Vorratsraum in die zweite Kammer bedingt das Dämpfen beim Rücklauf, der Fluidstrom von der zweiten Kammer über den Vorratsraum zur ersten Kammer bewirkt das Dämpfen beim Vorholen (Vorlauf). Dadurch wird nur ein Bruchteil der Schußbelastung auf die Lafette übertragen.

In einer ersten Ausführung weist der Dämpfer umfangsseitig bevorzugt zwei Steuerschlitze auf, die auf den jeweiligen Fluidstrom ausgelegt sind, wobei der größere Querschnitt zur der Kammer zeigt, aus der der hydraulische Druck kommt. Es ist je Dämpfungsrichtung zumindest ein Steuerschlitz eingebunden. Durch Änderung des Querschnitts der Steuerschlitze kann die Kennlinie der Dämpfung für den Vorlauf als auch für den Rücklauf eingestellt werden. Die Dämpfung kann dadurch für den Vorlauf anders als für den Rücklauf eingestellt werden.

In Weiterführung werden zusätzlich bevorzugt drei weitere Bohrungen eingebunden. In diesen Bohrungen sitzen Überdruckventile, bestehend aus Ventilstößel und einstellbarem Tellerfederpaket, die beim Rücklauf ggf. öffnen und beim Vorlauf geschlossen bleiben. Das Öl fließt dabei direkt aus der ersten Kammer in die zweite Kammer. Die Tellerfederpakete sind in ihrer Wirkung bzw. Federkraft variierbar. Damit kann die Dämpfung beim Waffenrücklauf eingestellt werden.

Ein Bypass zwischen der ersten Kammer und einer zweiten Kammer ermöglicht weitere Einstellmöglichkeiten des Dämpfungs- und Geschwindigkeitsniveaus, da dadurch ein einstellbarer Teil des Fluidstroms nahezu ungehindert in die andere Kammer fließen kann.

Der hydraulische Teil des Dämpfers bildet ein in sich geschlossenes System, das einen Vorratsraum für das Öl umfasst. Dazu gehört auch ein Ausgleichskolben, der mit einer Feder einen Basisdruck aufbaut, unter dem das hydraulische System gehalten wird. Bei einem Ölverlust wandert dieser Ausgleichskolben gegen das Dämpfergehäuse. Die Position des Ausgleichskolbens kann als Füllstandsindikator verwendet werden. In einer einfachsten Ausführung kann eine Gewindehülse des Ausgleichkolbens diese Funktion übernehmen. Wenn diese nicht mehr sichtbar ist, sollte Öl nachgefüllt werden.

Das Vorholen wird durch eine mit dem hydraulischen Teil des Dämpfers zusammenwirkende Rückholfeder realisiert, da der hydraulische Teil des Dämpfers über keinen eigenen Energiespeicher verfügt. Der hydraulische Teil des Dämpfers beeinflusst dabei die Rückholenergie, die durch den hydraulischen Teil des Dämpfers gedämpft wird.

Anhand eines Ausführungsbeispiels mit Zeichnung soll die Erfindung näher erläutert werden. Es zeigt:
- Fig. 1: Teile einer Waffe mit einem angebauten Dämpfer,
- Fig. 2: den Dämpfer aus Fig. 1 in einer perspektivischen Darstellung,
- Fig. 3: den Dämpfer entsprechend Fig. 2 in einer Schnittdarstellung,
- Fig. 4: den Dämpfer in einer ersten Ausführungsform,
- Fig. 5: eine Durchsichtdarstellung des Dämpfers zur Funktionserläuterung,
- Fig. 6: eine zweite Ausführungsform des Dämpfers,
- Fig. 7: eine Schnittdarstellung des Dämpfers nach Fig. 6,
- Fig. 8: eine Darstellung des Dämpfers mit verschobenen Kolben.
- Fig. 9: eine Ölüberwachungseinheit für den Dämpfer.

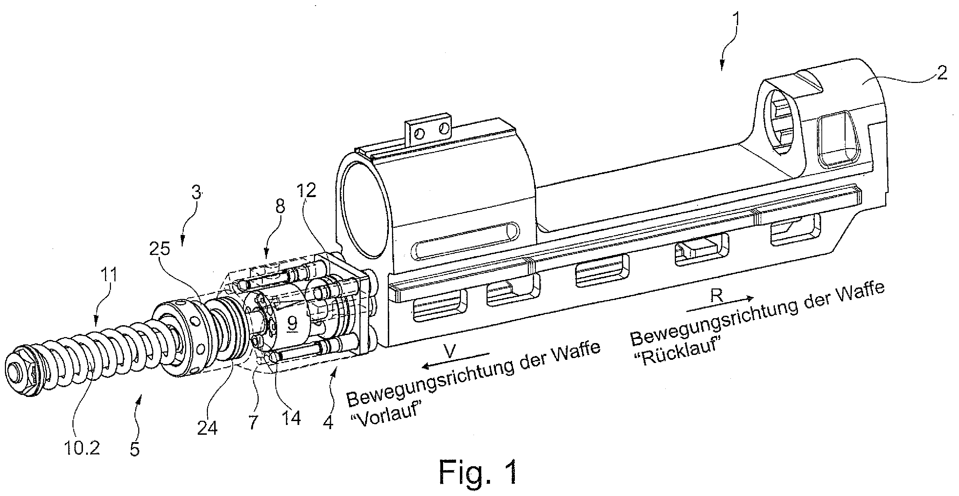

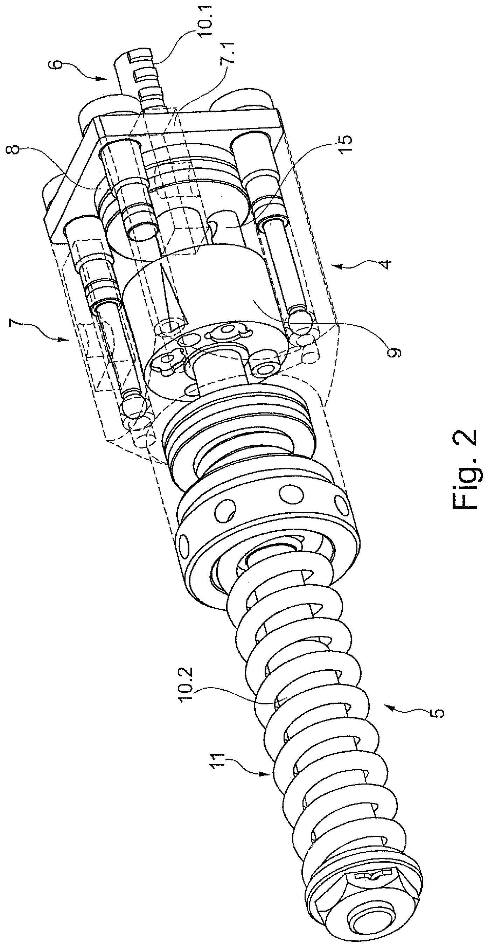

In Fig.1 sind Teile einer lafettierbaren Waffe 1, hier eine Kammer- oder Verriegelungshülse 2 und einem an der Verriegelungshülse 2 eingebundenen Dämpfer 3 in einer Seitenansicht dargestellt. Der Dämpfer 3 wird durch einen hydraulischen Teil 4 und einen sich diesem vorderseitig anschließenden Federteil 5 gebildet. Die Verbindung des Dämpfers 3 mit der Verriegelungshülse 2 erfolgt beispielsweise über eine Bajonettverbindung 6 (Fig. 2).

In Fig. 2 ist der Dämpfer 3 in einer perspektivischen Darstellung in Schussrichtung weisend dargestellt. Der Dämpfer 3 weist ein Dämpfergehäuse 7 auf, dass den hydraulischen Teil 4 des Dämpfers 3 aufnimmt. Dieses Dämpfergehäuse 7 ist über seine Befestigung 7.1 waffenfest in der Waffe befestigt. Im Dämpfergehäuse 7 eingebunden ist ein hydraulischer Dämpfer 8, der aus einem Kolben 9 und einer den Kolben 9 bewegenden Kolbenstange 10 besteht. An einem der Enden 10.1 ist die Kolbenstange 10 mit der Bajonettverbindung 6 versehen. Die obere, aus dem Dämpfergehäuse 7 herausragende Kolbenstange 10.2 weist umfangsseitig eine Rückholfeder 11 auf, die beim Rücklauf der Waffe und damit dem Rücklauf der Verrieglungshülse 2 gespannt wird. Beim Vorlauf holt diese Rückholfeder 11 den hydraulischen Dämpfer 8 und die rücklaufenden Massen zurück.

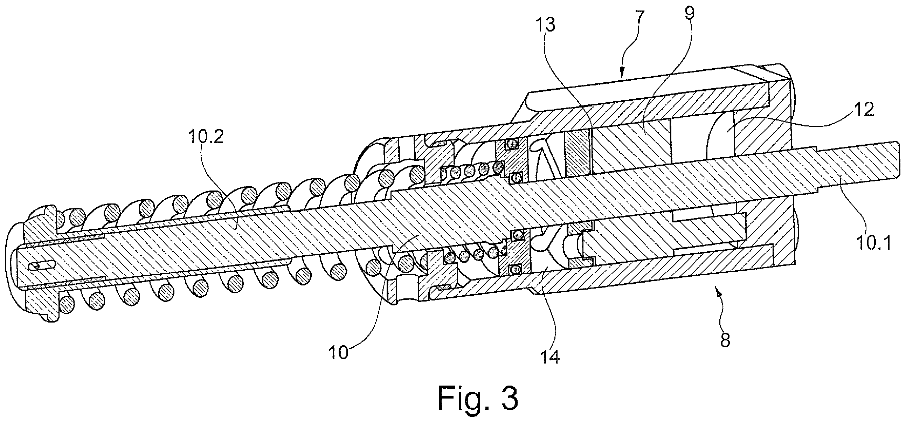

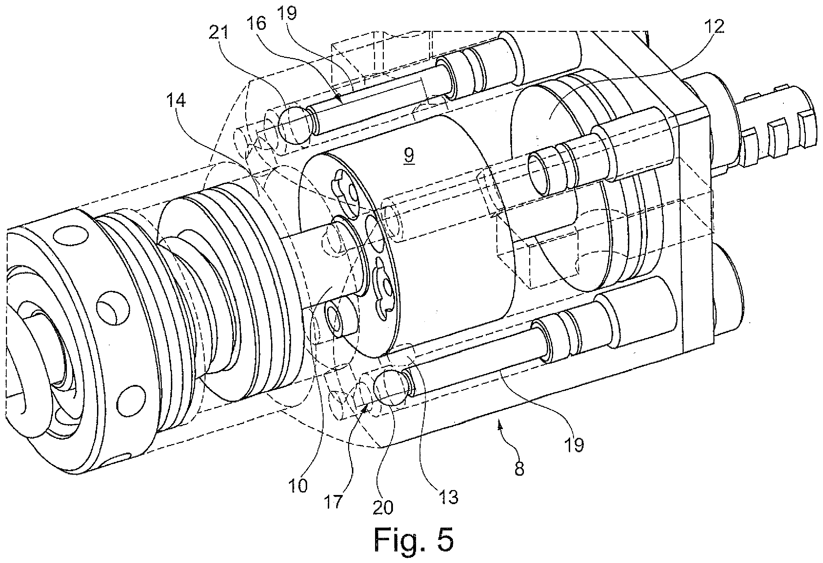

Fig. 3 zeigt eine Schnittdarstellung des Dämpfers 3 aus Fig. 2. Im Dämpfergehäuse 7 umfasst der hydraulische Dämpfer 8 eine erste Kammer 12 sowie eine zweite Kammer 13 und eine Vorratskammer 14. Die zweite Kammer 13 wird beim Rücklauf der Waffe mit dem Öl aus der ersten Kammer 12 befüllt und erhöht ihren Querschnitt, während die erste Kammer 12 an Querschnitt verliert. Die erste Kammer 12 ist über einen Hydraulikkanal 16 mit der Vorratskammer 14 und diese über einen Hydraulikkanal 17 mit der zweiten Kammer 13 verbunden (Fig. 5).

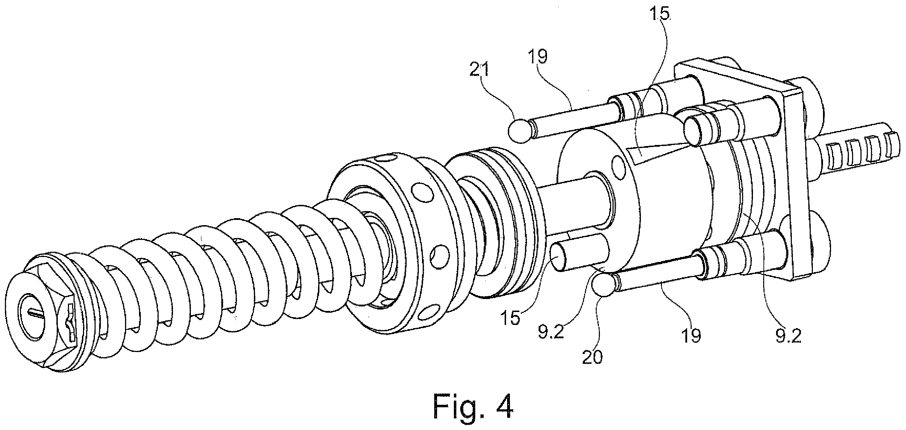

In einer ersten Ausführungsform ist im Kolben 9 von jeder Seite zumindest ein Steuerschlitz 15 eingebracht, wobei sich der Querschnitt des Steuerschlitzes 15 für den Rücklauf R von der Unterseite 9.1 in Richtung Oberseite 9.2 des Kolbens hin verjüngt (nicht näher dargestellt) und für den Vorlauf V von der Oberseite 9.2 zur Unterseite 9.1 (Fig. 4). Der direkte Ölfluss zwischen der ersten Kammer 12 und der zweiten Kammer 13 wird durch die Querschnitte der Steuerschlitze 15 bestimmt und gibt die Dämpfung je Dämpfungsrichtung vor. Der Ölfluss erfolgt beim Rückstoß R über den Hydraulikkanal 16 in die Vorratskammer 14 und dann aus der Vorratskammer 14 in die zweite Kammer 13 (Fig. 5). Beim Vorlauf V wird aus der zweite Kammer 13 das Öl über die Vorratskammer 14 in die erste Kammer 12 gedrückt.

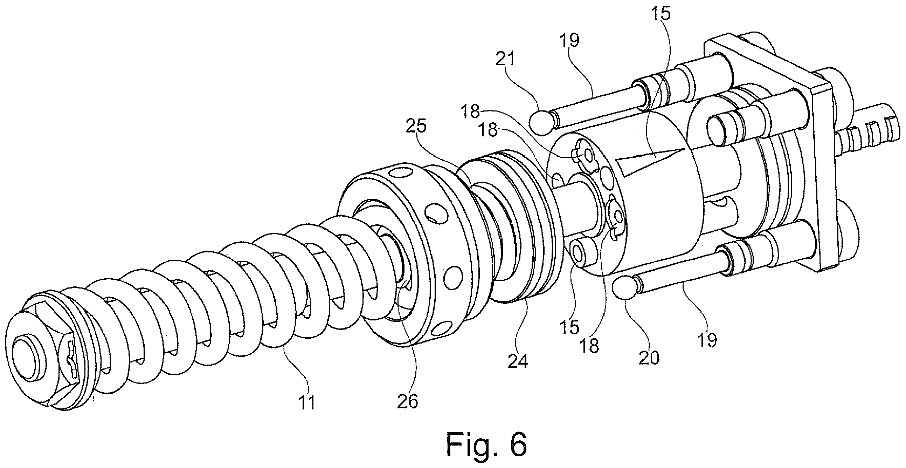

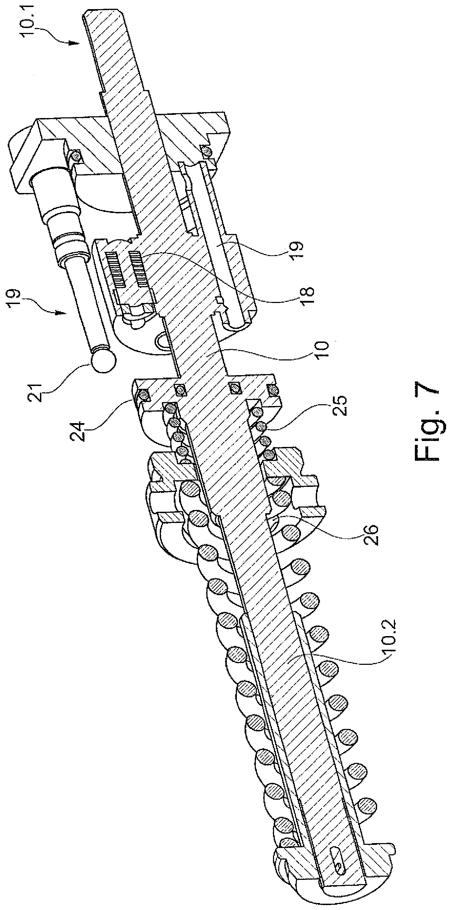

In einer weiteren Ausführung sind weitere Ventile 18 vorgesehen, bevorzugt drei. Die Ventile 18 werden vorzugsweise in Form von Tellerfedern oder Tellerfederpaketen gebildet, die in Bohrungen des Kolbens 9 eingebracht sind. Im Vorlauf V sind diese Ventile 18 geschlossen, im Rücklauf R geben die Tellerfedern die Ventilöffnungen frei. Es erfolgt über die Ventile 18 ein direkter Durchfluss von der ersten Kammer 12 zur zweiten Kammer 13. Dadurch wird eine schnellere Dämpfung insbesondere beim Rücklauf geschaffen (Fig. 6), während die Dämpfung beim Vorlauf langsamer abläuft. Fig. 7 zeigt eine Schnittdarstellung aus Fig. 6.

Der hydraulische Dämpfer 8 umfasst in einer besonderen Ausführung einen Bypass 15, der zusätzlich einen direkten Fluss des Öls von der ersten Kammer 12 in die zweite Kammer 13 ermöglicht, wenn dieses erwünscht wird.

Des Weiteren sind Halterbohrungen 19 im Dämpfergehäuse 7 eingebunden. Diese weisen an ihrem oberen Ende Rückschlagkugeln 20, 21 auf. Diese dienen dazu, den Weg zwischen der druckführenden Kammer 12, 13 in den Vorratsraum 14 zu verschließen, da nur die nicht druckführende Kammer 12, 13 über die Vorratskammer 14 ohne Drossel das Öl erhalten soll. Das Verschließen Kanäle 16, 17 wird dadurch erreicht, dass in diesem in sich geschlossenen Dämpfungssystem 8 aus der druckführenden Kammer 12, 13 Öl in die Haltebohrungen 19 strömt. Dieses Öl drückt die Rückschlagkugeln 20, 21 in einen Sitz 22 oder 23 im jeweiligen Kanal 16 (21), 17 (20), die den Weg zwischen der druckführenden Kammer 12, 13 und der Vorratskammer 14 verschließen.

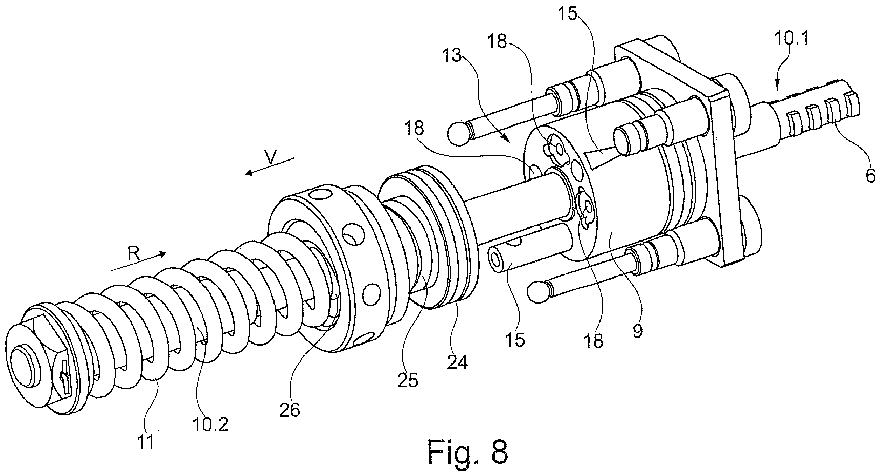

Fig. 8 zeigt mehr schematisch den beim Waffenrücklauf verschobenen Kolben 9 innerhalb des Dämpfers 8. Vor diesem hat sich die zweite Kammer 13 mit Öl befüllt.

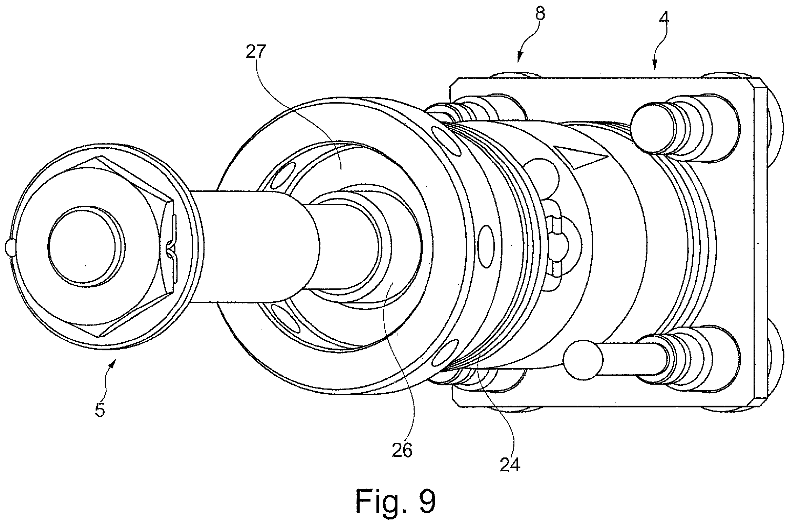

Erfindungsgemäß weist der hydraulische Dämpfer 8 einen die Vorratskammer 14 umschließenden Ausgleichskolben 24 auf, der durch eine Ausgleichsfeder 25 vom oberen Teil des Dämpfungsgehäuse 7 beabstandet wird. Auch hierbei kann es sich um eine Schraubenfeder handeln. Dieser Ausgleichskolben 24 dient dazu, einen Ölverlust im Dämpfer 8 anzuzeigen. Die Ausgleichsfeder 25 gibt den Basisdruck im System vor. Bei sich verändernden Basisdruck, wenn Ölverlust eintritt, die Vorratskammer 14 sich leert, wandert der Ausgleichskolben 24 gegen den Kolben 9 im Dämpfer 8. Ein mit diesem Ausgleichskolben 24 verbundene Hülse 26 oder dergleichen wandert ebenfalls in diese Richtung. Spätestens dann, wenn diese Hülse 26 nicht mehr am Bund 27, an dem die Rückholfeder 11 anschlägt, sichtbar ist, wird ein Nachfüllen des Dämpfers 8 mit Öl signalisiert (Fig. 9).

## Patentansprüche

1. Hydraulischer Dämpfer (8) für eine Waffe, mit einem Dämpfergehäuse (7), einem Kolben (9) und einer Kolbenstange (10), mit einer ersten Kammer (12), einer zweiten Kammer (13) sowie einer Vorratskammer (14), wobei die erste Kammer (12) über einen Hydraulikkanal (16) mit der Vorratskammer (14) und diese über einen Hydraulikkanal (17) mit der zweiten Kammer (13) verbunden ist, sodass die zweite Kammer (13) über die Vorratskammer (14) beim Rücklauf der Waffe mit dem Öl aus der ersten Kammer (12) befüllt wird, **gekennzeichnet durch** einen, die Vorratskammer (14) umschließenden bzw. diese bildenden Ausgleichskolben (24), der durch eine Ausgleichsfeder (25) vom oberen Teil des Dämpfungsgehäuses (7) beabstandet ist, wobei bei eintretendem Ölverlust der Ausgleichskolben (24) gegen den Kolben (9) im Dämpfer (8) wandert.

2. Hydraulischer Dämpfer (8) nach Anspruch 1, **dadurch gekennzeichnet, dass** eine mit dem Ausgleichkolben (24) verbundene Hülse (26) mitwandert und spätestens dann, wenn diese Hülse (26) nicht mehr sichtbar ist, ein Nachfüllen des Dämpfers (8) mit Öl signalisiert wird.

3. Hydraulischer Dämpfer (8) nach Anspruch 1 oder 2, **dadurch gekennzeichnet, dass** im Kolben (9) von jeder Seite zumindest ein Steuerschlitz (15) eingebracht ist, dessen Querschnitt für den Rücklauf (R) von der Unterseite (9.1) in Richtung Oberseite (9.2) des Kolbens (9) hin sich verjüngt.

4. Hydraulischer Dämpfer (8) nach einem der Ansprüche 1 bis 3, **dadurch gekennzeichnet, dass** Ventile (18) vorgesehen sind, die in Bohrungen des Kolbens (9) eingesetzt sind, die im Vorlauf (V) geschlossen und im Rücklauf (R) geöffnet sind.

5. Hydraulischer Dämpfer (8) nach Anspruch 4, **dadurch gekennzeichnet, dass** die Ventile (18) durch Tellerfedern oder Tellerfederpaketen gebildet werden.

6. Hydraulischer Dämpfer (8) nach einem der Ansprüche 1 bis 5, **dadurch gekennzeichnet, dass** Halterbohrungen (19) im Dämpfergehäuse (7) eingebunden, die an ihrem oberen Ende Rückschlagkugeln (20, 21) aufweisen, wodurch ein Ölfluss aus der druckführenden Kammer (12, 13) in den Vorratsraum (14) verhindert wird.

7. Dämpfer (3) mit einem hydraulischen Dämpfer (8) nach einem der Ansprüche 1 bis 6, **dadurch gekennzeichnet, dass** eine Rückholfeder (11) vor dem hydraulischen Dämpfer (8) eingebunden ist.

8. Waffe mit einem Dämpfer (3) nach Anspruch 7.

## Claims

1. Hydraulic damper (8) for a weapon, having a damper housing (7), a piston (9) and a piston rod (10), having a first chamber (12), a second chamber (13) and a reservoir chamber (14), the first chamber (12) being connected via a hydraulic duct (16) to the reservoir chamber (14), and the latter being connected via a hydraulic duct (17) to the second chamber (13), with the result that the second chamber (13) is filled with the oil from the first chamber (12) via the reservoir chamber (14) during the recoil of the weapon, **characterized by** a compensating piston (24) which forms or encloses the reservoir chamber (14) and is spaced apart from the upper part of the damping housing (7) by way of a compensating spring (25), the compensating piston (24) moving counter to the piston (9) in the damper (8) in the case of an oil loss occurring.

2. Hydraulic damper (8) according to Claim 1, **characterized in that** a sleeve (26) which is connected to the compensating piston (24) moves with it, and refilling of the damper (8) with oil is signalled at the latest when the said sleeve (26) is no longer visible.

3. Hydraulic damper (8) according to Claim 1 or 2, **characterized in that** at least one control slot (15) is made in the piston (9) from each side, the cross section of which control slot (15) tapers for the recoil (R) from the bottom side (9.1) in the direction of the top side (9.2) of the piston (9).

4. Hydraulic damper (8) according to one of Claims 1 to 3, **characterized in that** valves (18) are provided which are inserted into bores of the piston (9), which bores are closed during the advancing (V) and are open during the recoil (R).

5. Hydraulic damper (8) according to Claim 4, **characterized in that** the valves (18) are formed by way of cup springs or cup spring assemblies.

6. Hydraulic damper (8) according to one of Claims 1 to 5, **characterized in that** holder bores (19) are integrated into the damper housing (7), which holder bores (19) have check balls (20, 21) at their upper end, as a result of which an oil flow from the pressurized chamber (12, 13) into the reservoir space (14) is prevented.

7. Damper (3) having a hydraulic damper (8) according to one of Claims 1 to 6, **characterized in that** a return spring (11) is integrated in front of the hydraulic damper (8).

8. Weapon having a damper (3) according to Claim 7.

## Revendications

1. Amortisseur hydraulique (8) destiné à une arme, l'amortisseur hydraulique comprenant un boîtier (7), un piston (9) et une tige de piston (10), une première chambre (12), une deuxième chambre (13) et une chambre de stockage (14), la première chambre (12) étant reliée par un conduit hydraulique (16) à la chambre de stockage (14) et celle-ci étant reliée par un conduit hydraulique (17) à la deuxième chambre (13) de sorte que la deuxième chambre (13) soit remplie par la chambre de stockage (14) avec l'huile provenant de la première chambre (12) lors du recul de l'arme, **caractérisé par** un piston de compensation (24) qui entoure ou forme la chambre de stockage (14) et qui est séparé de la partie supérieure du boîtier d'amortissement (7) par un ressort de compensation (25), le piston de compensation (24) se déplace vers le piston (9) dans l'amortisseur (8) en cas de perte d'huile.

2. Amortisseur hydraulique (8) selon la revendication 1, **caractérisé en ce qu'**un manchon (26), relié au piston de compensateur (24), se déplaçant conjointement avec celui-ci et signale, au plus tard lorsque ce manchon (26) n'est plus visible, un remplissage de l'amortisseur (8) avec de l'huile.

3. Amortisseur hydraulique (8) selon la revendication 1 ou 2, **caractérisé en ce qu'**au moins une fente de commande (15), dont la section transversale s'amincit depuis le côté inférieur (9.1) en direction du coté supérieur (9.2) du piston (9) pour le recul (R), est ménagée dans le piston (9) de chaque côté.

4. Amortisseur hydraulique (8) selon l'une des revendications 1 à 3, **caractérisé en ce que** des clapets (18) sont prévus qui sont insérés dans des alésages du piston (9) qui sont fermés dans le sens de l'avance (V) et qui sont ouverts dans le sens du recul (R).

5. Amortisseur hydraulique (8) selon la revendication 4, **caractérisé en ce que** les clapets (18) sont formés par des rondelles-ressorts ou des ensembles de rondelles-ressorts.

6. Amortisseur hydraulique (8) selon l'une des revendications 1 à 5, **caractérisé en ce que** des alésages de maintien (19) sont ménagés dans le boîtier d'amortisseur (7), lesquels comportent à leur extrémité supérieure des billes anti-retour (20, 21) empêchant l'huile de s'écouler de la chambre sous pression (12, 13) dans la chambre de stockage (14).

7. Amortisseur (3) comprenant un amortisseur hydraulique (8) selon l'une des revendications 1 à 6, **caractérisé en ce qu'**un ressort de rappel (11) est intégré en amont de l'amortisseur hydraulique (8).

8. Arme équipée d'un amortisseur (3) selon la revendication 7.
